# EUROPEAN PATENT SPECIFICATION

(11) **EP 3 879 779 B1**
(45) Date of publication and mention of the grant of the patent: **01.01.2025**
(21) Application number: 19882617.4
(22) Date of filing: 05.11.2019
(51) Int. Cl.: H04L 12/28, H04L 12/46, H04W 24/04, H04W 76/12, H04W 76/16, H04W 88/16

(54) **BEARER SIDE NETWORK SYSTEM, FIXED-MOBILE COEXISTENCE AND CONVERGENCE SYSTEM, AND DEPLOYMENT METHOD THEREFOR**
TRÄGERSEITIGES NETZWERKSYSTEM, STATIONÄRES MOBILES KOEXISTENZ- UND KONVERGENZSYSTEM UND ANWENDUNGSVERFAHREN DAFÜR
SYSTÈME DE RÉSEAU CÔTÉ SUPPORT, SYSTÈME DE COEXISTENCE ET DE CONVERGENCE MOBILE FIXE, ET PROCÉDÉ DE DÉPLOIEMENT ASSOCIÉ

(30) Priority: 05.11.2018 CN 201811309129
(43) Date of publication of application: 15.09.2021
(73) Proprietor: ZTE Corporation, Shenzhen Guangdong 518057 (CN)
(72) Inventor: SONG, Xueyan, Shenzhen, Guangdong 518057 (CN); ZHU, Haidong, Shenzhen, Guangdong 518057 (CN)
(74) Representative: Regimbeau
(86) International application number: PCT/CN2019/115633
(87) International publication number: WO 2020/093994

(56) References cited:
- CN-A- 101 123 549
- CN-A- 101 494 638
- CN-A- 107 508 736
- CN-A- 110 401 572
- US-A1- 2017 245 207
- LI, TING ET AL.: "The Positioning and Development Trends of Mobile IP Metro Area Network", MODERN SCIENCE & TECHNOLOGY OF TELECOMMUNICATIONS, no. 12, 31 December 2007 (2007-12-31), pages 1 - 7, XP055811907
- BBF WIKI: "SD-420 5G Fixed Mobile Convergence Study", 3GPP, 12 January 2018 (2018-01-12), XP051390182

## Description

### TECHNICAL FIELD

Embodiments of the present disclosure relate to the field of fixed-mobile convergence networks, for example, a bearer side network system, a fixed-mobile coexistence and convergence system, and a deployment method therefor.

### BACKGROUND

The international standards organization next generation mobile network (NGMN) in the 5th generation mobile communication technology (5G) white paper clarifies demands for a fixed-mobile convergence network: in order to achieve the seamless experience of consumer end-to-end traffic, a 5G system should support the fixed-mobile convergence; in the meanwhile, for operator users of different access types, independent authentication and billing may be completed through a uniform user database and a uniform information system, not limited to a fixed network or a mobile network.

A fixed communication network and a mobile communication network are two independent private networks, in the short term, it is unrealistic to achieve the complete convergence of the fixed communication network and the mobile communication network in the network deployment. Therefore, in the transition stage, the coexistence and convergence evolution of the mobile communication network and the fixed communication network may consider to be achieved through the convergence of metropolitan area networks. The mainstream mobile communication networks use the long term evolution (LTE) technology, and an LTE mobile communication metropolitan area network includes a metropolitan area Internet protocol (IP) network, a metropolitan area transport network and an integrated access network. The bearer level is 7 to 10, and there are problems such as complex bearer levels, traffic scheduling path detours and an increased delay during a traffic forwarding process.

Further relevant technology is also known from CN 107 508 736 B which relates to an internet network framework for converging and accessing multiple services.

### SUMMARY

Embodiments of the present disclosure provide a bearer side network system, a fixed-mobile coexistence and convergence system and a deployment method therefor, which can solve the problems of the excessive bearer levels of mobile communication traffic, the traffic detour, the long network delay time, etc.

The invention is set out in the appended set of claims.

### BRIEF DESCRIPTION OF DRAWINGS

FIG. 1 is a schematic diagram of a reference architecture of a coexistence model;
FIG. 2 is a structural diagram of a fixed-mobile coexistence and convergence system;
FIG. 3 is a structural diagram of an MSG;
FIG. 4 is a schematic diagram of a network architecture of a fixed-mobile coexistence and convergence system;
FIG. 5 is a schematic diagram of a network transformation flow of a fixed-mobile coexistence and convergence system;
FIG. 6 is a schematic diagram for achieving a bearer of mobile control traffic and data traffic in the fixed-mobile coexistence and convergence system;
FIG. 7 is a schematic diagram for achieving a bearer of broadband user online traffic in the fixed-mobile coexistence and convergence system;
FIG. 8 is a schematic diagram for achieving a bearer of home broadband Internet protocol television (IPTV) traffic in the fixed-mobile coexistence and convergence system;
FIG. 9 is a flowchart of a deployment method for a bearer side network system; and
FIG. 10 is a flowchart of a deployment method for a fixed-mobile coexistence and convergence system.

### DETAILED DESCRIPTION

The present disclosure will be described with reference to the drawings and embodiments. The embodiments described herein are intended to explain and not to limit the present disclosure.

In the related art, the international standards organization broadband forum (BBF) and the 3rd generation partnership project (3GPP) have carried out standardization cooperation works in the field of fixed mobile convergence (FMC), and the standardization cooperation works are in process. Functions related to the fixed communication network are developed in the BBF, and demand functions of the mobile communication network are developed in the 3GPP. The purpose of the standardization cooperation works is to achieve deep convergence of the fixed communication network and the mobile communication network in the network structure and the traffic level. The purpose of convergence is to uniformly access different types of access networks to the same 5G core network. The BBF standards organization has given three evolution routes for the standard specification of fixed-mobile convergence.
1. Integration model, by introducing a wireline-5G access network (W-5GAN) apparatus, an access network achieves the convergence evolution with the 5G core (5GC) network, which is the ultimate goal of the convergence evolution.
2. Inter-working model, the convergence evolution with the SGC is achieved by continuing to use a broadband network gateway (BNG) apparatus in the fixed communication network and adding an inter-working apparatus (i.e., a 5G fixed-mobile inter-working function (5G-FMIF)). This is a transition stage of the convergence evolution.
3. Co-existence model. A convergence characteristic of the co-existence model is that the fixed communication network and the mobile communication network use a uniform transmission metropolitan area network, but the access and core of original network deployment are still used, so as to reduce the deployment and maintenance of the metropolitan area network. This is recommended for early deployment of the convergence evolution.

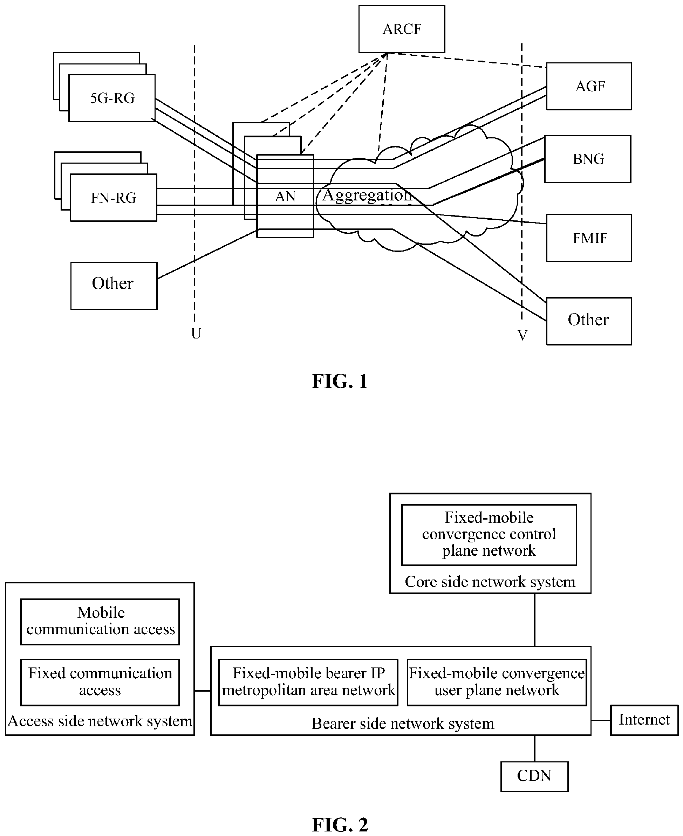

The network convergence deployments of the integration model and the inter-working model have made great changes to inter-working apparatuses of the fixed communication network and the 5G core network. The integration model uses the 5G access gateway function (5G-AGF) of the inter-working apparatuses to access the 5G core network, and the inter-working model uses the 5G-FMIF of the inter-working apparatuses to access the 5G core network, so as to implement user registration, authentication, etc. The inter-working apparatuses support N1, N2, N3 and other interface technologies defined by the 3GPP on the communication control plane. For the coexistence model, since the access network and the core network still use apparatuses in the related art, it is only the convergence of transmission bearer networks and the changes to the existing network apparatuses are relatively small, so the co-existence model can be used as an early scheme of the convergence evolution of the 5G mobile communication network. The BBF describes an application model in the coexistence scenario (see BBF FMC-407 file), and also provides a reference architecture of the coexistence model. FIG. 1 is a schematic diagram of a reference architecture of a coexistence model. In FIG. 1, AN represents an access network (AN), 5G-RG represents a 5G residential gateway (5G-RG), FMIF represents a fixed mobile inter-working function (FMIF), FN-RG represents a fixed network residential gateway (FN-RG), ARCF represents an access network resource control function (ARCF), U represents a user side (U) reference point, and V represents a network side (V) reference point.

Based on the preceding content, multiple embodiments below are provided.

### Embodiment one

The embodiment of the present disclosure provides a fixed-mobile coexistence and convergence system, which can achieve the fixed-mobile convergence.

FIG. 2 is a structural diagram of a fixed-mobile coexistence and convergence system, as shown in FIG. 2, the fixed-mobile coexistence and convergence system may include a bearer side network system, an access side network system, a core side network system and the Internet. The bearer side network system is respectively connected to the access side network system, the core side network system and the Internet.

In an exemplary disclosure, the access side network system is configured to achieve a mobile communication access and a fixed communication access. In a practical application, the mobile communication access may be achieved by using an eNodeB (eNB), and the fixed communication access may be achieved by using home user customer premises.

The bearer side network system includes a fixed-mobile bearer IP metropolitan area network for achieving a uniform bearer of mobile communication and fixed communication, and a mobile communication core network user plane apparatus sunk to an aggregation layer of the fixed-mobile bearer IP metropolitan area network. The mobile communication core network user plane apparatus is in a communication connection with the fixed-mobile bearer IP metropolitan area network.

In the embodiment of the present disclosure, since the fixed communication network typically has the bearer level of 3, sinking the mobile communication core network user plane apparatus to the aggregation layer of the fixed-mobile bearer IP metropolitan area network can solve the problems of the excessive bearer levels of mobile communication traffic, the traffic detour, the long network delay time, etc. On the one hand, the bearer levels of the mobile communication network can be reduced, flattening of the bearer network can be achieved, and the network delay can be reduced; on the other hand, the mobile communication metropolitan area network and the fixed communication metropolitan area network are aggregated into the same metropolitan area bearer network, which reduces the network construction cost and improves the network operation and maintenance efficiency.

In an exemplary disclosure, the core side network system may include a fixed-mobile convergence control plane network, and the fixed-mobile convergence control plane network may include a mobile communication core network control plane apparatus and a fixed communication core network control plane apparatus. The bearer side network system further includes a fixed communication core network user plane apparatus, where the mobile communication core network user plane apparatus is connected to the fixed communication core network user plane apparatus, and the fixed communication core network user plane apparatus is configured to achieve data communication of a forwarding plane.

Exemplarily, the mobile communication core network user plane apparatus and the fixed communication core network user plane apparatus may be used to form a fixed-mobile convergence user plane network, that is, referring to FIG. 2, the bearer side network system may include the fixed-mobile bearer IP metropolitan area network and the fixed-mobile convergence user plane network.

In the embodiment of the present disclosure, a newly added multi-service gateway (MSG) may be used to achieve a fixed communication core network user plane apparatus (MSG user plane, MSG-U) and a fixed communication core network control plane apparatus (MSG control plane, MSG-C). In an exemplary disclosure, the MSG includes the fixed communication core network user plane apparatus located in the fixed-mobile convergence user plane network and the fixed communication core network control plane apparatus located in the fixed-mobile convergence control plane network. The fixed communication core network user plane apparatus is sunk to the aggregation layer of the fixed-mobile bearer IP metropolitan area network described above. The Internet is configured to achieve the online access of mobile communication and fixed communication network users.

Referring to FIG. 2, the fixed-mobile coexistence and convergence system further includes a content delivery network (CDN), and the CDN is configured to provide an interactive Internet protocol television (IPTV) service of the fixed communication network, that is, a fixed network IPTV user video source access can be achieved.

In the related art, a public data network gateway (PGW) and a service gateway (SGW) of a long term evolution (LTE) core network are important network elements of the evolved packet core (EPC) in the LTE mobile communication network. The SGW achieves termination of radio access network (RAN) backhaul traffic at an S1 interface user plane through an S1-user plane (S1-U) interface, and the PGW achieves connections with an Internet user plane through an SGi interface. In the exemplary disclosure, the mobile communication core network user plane apparatus includes the PGW and the SGW. In the exemplary disclosure, the SGW and the PGW may be combined as S/PGW for short. In order to solve the problems of the excessive bearer levels and the traffic detour in the mobile communication LTE network, the bearer levels are reduced to 3 levels through sinking the mobile communication core network user plane apparatus (S/PGW user plane, S/PGW-U) to the aggregation layer, thus achieving great flattening of the mobile bearer network, that is, by the network flattening transformation, the network construction cost is reduced, the network transmission delay is reduced, and the network maintenance efficiency is improved.

The fixed communication core network user plane apparatus (MSG-U) and the fixed communication core network control plane apparatus (MSG-C) in the MSG may be configured to be achieved by using a forwarding-control split architecture. In an exemplary disclosure, the forwarding-control split architecture may be achieved based on a software defined network (SDN) and a network function virtualization (NFV). The MSG may be a forwarding-control split system architecture (also referred to as the forwarding-control split architecture). The MSG apparatus based on the software virtualization SDN and NFV technologies is constructed to achieve a uniform convergence access for the fixed communication network and the mobile communication network, thereby achieving the coexistence and convergence of fixed communication network and mobile communication network traffic.

In an exemplary disclosure, the above MSG achieved based on the SDN and NFV technologies uses the forwarding-control split architecture, the control plane achieves traffic control through the software virtualization, and the forwarding plane uses high-performance forwarding of a dedicated traffic board (e.g., based on a network processor (NP)), therefore, the performance bottleneck of X86 soft forwarding is overcome, and the operation demands of large connection sessions and high bandwidth of a telecom-level network are satisfied.

The MSG may be achieved by fully using the existing network apparatuses. For example, the MSG may be achieved by using a virtual broadband network gateway (vBNG), and the vBNG may include a vBNG user plane (vBNG-U) and a vBNG control plane (vBNG-C). The vBNG-C is configured to achieve protocol negotiation, user authentication, access control, user management, etc. of broadband user access, and vBNG-U is configured to achieve forwarding of user data traffic

The mobile communication core network user plane apparatus is connected to an aggregation network of the fixed-mobile bearer IP metropolitan area network through an S1-U interface of the SGW, and the mobile communication core network user plane apparatus is connected to the fixed communication core network user plane apparatus through an SGi interface of the PGW. Since the S/PGW-U is sunk to the aggregation layer, the S 1-U interface used for the SGW forwarding function and of the original mobile communication core network user plane apparatus may be connected to a metropolitan area aggregation network (i.e. the aggregation network of the fixed-mobile bearer IP metropolitan area network) through the S/PGW-U sunk to the aggregation layer, so as to achieve the user plane data communication, and the SGi interface of the original mobile communication core network user plane apparatus, which is directly connected to the Internet, is sunk to the aggregation layer of the fixed communication network and connected to the MSG-U, thus achieving data access to the Internet.

The bearer side network system may further include a switch (SW) apparatus, and the S/PGW-U may be connected to the MSG-U through the SW apparatus. In this manner, the mutual communication between the S/PGW-U and the MSG-U may be achieved by using the SW apparatus. In a practical application, the SW apparatus is configured to support pass-through of SGi interface traffic and S 1-U interface traffic of the S/PGW-U. In an exemplary disclosure, the SW apparatus is not necessary, but optionally added based on geographical location considerations. In an exemplary disclosure, the mobile communication core network user plane apparatus is connected to the fixed communication core network user plane apparatus through the SW apparatus.

For control plane communication of the mobile communication core network or the fixed communication core network, the transmission and management of user access signaling such as point-to-point protocol (PPP) user access signaling may be born through a virtual extensible local area network (VXLAN) tunnel. In an exemplary disclosure, for mobile traffic, a first VXLAN tunnel may be established between the S/PGW-U and the mobile communication core network control plane apparatus (S/PGW control plane, S/PGW-C), and information transmission of a management channel and mobile communication signaling is achieved by using the first VXLAN tunnel. For the fixed communication network broadband traffic, the IPTV traffic, etc., a second VXLAN tunnel is established between the vBNG-U and the vBNG-C, and information transmission of a management channel and fixed communication network traffic signaling is achieved by using the second VXLAN tunnel.

In an exemplary disclosure, a three-layer logical route in a connected state exists between the mobile communication core network control plane apparatus and the mobile communication core network user plane apparatus.

In an exemplary disclosure, a three-layer logical route in a connected state exists between the fixed communication core network control plane apparatus and the fixed communication core network user plane apparatus.

In an exemplary disclosure, a second VXLAN tunnel is established between the fixed communication core network control plane apparatus and the fixed communication core network user plane apparatus, and the second VXLAN tunnel is configured to achieve information transmission of a management channel and fixed communication network traffic signaling.

In an exemplary disclosure, the fixed communication core network control plane apparatus is configured to issue VXLAN tunnel traffic configuration information to the fixed communication core network user plane apparatus by a network configuration (NetConf) protocol.

The fixed communication core network user plane apparatus is configured to perform VXLAN message encapsulation on a received protocol message and send a VXLAN message obtained by the encapsulation of a VXLAN function module to the fixed communication core network control plane apparatus.

The fixed communication core network control plane apparatus is configured to: decapsulate the VXLAN message, perform a uniform allocation on address resources, and issue a user forwarding table entry to the fixed communication core network user plane apparatus by using an OpenFlow protocol.

The CDN is sunk to the aggregation layer of the fixed communication network and is deployed at the MSG-U, so as to achieve nearby acquisition of the IPTV service of users and reduce the access delay of the IPTV traffic.

The MSG may support a network address transport (NAT) function, and the NAT may be configured to transport a user private network IP address to a public network IP address, so as to achieve an IPTV access to the CDN.

The traffic deployment may use a dual-plane backup mode, and the active-backup is deployed in both the control plane communication network and the user plane communication network to ensure protection switching in the case of a network failure.

A first backup network for backing up a working state of the user plane communication network is configured in the fixed-mobile coexistence and convergence system described above, the first backup network and the user plane communication network are configured to work in an active-backup mode, and the protection switching is achieved by using the first backup network when a failure of the user plane communication network occurs. The user plane communication network includes at least one of the mobile communication core network user plane apparatus or the fixed communication core network user plane apparatus.

In an exemplary disclosure, a second backup network for backing up a working state of the control plane communication network may be configured in the fixed-mobile coexistence and convergence system described above, the second backup network and the control plane communication network are configured to work in an active-backup mode, and the protection switching may be achieved by using the first backup network when a failure of the control plane communication network occurs. In an exemplary disclosure, the control plane communication network includes at least one of the mobile communication core network control plane apparatus or the fixed communication core network control plane apparatus.

As can be seen that the embodiment of the present disclosure provides the fixed-mobile coexistence and convergence system based on the reference structure (referring to FIG. 1) of the fixed-mobile convergence and coexistence model provided by the BBF and in combination with the actual communication network deployment situation, and the coexistence and convergence of the mobile communication network and the fixed communication network can be achieved. On the premise of using the existing network apparatuses, through the convergence of the fixed communication network and the mobile communication network at the metropolitan area network level, the capital expenditure (CAPEX) and the operating expense (OPEX) of the operator can be reduced, the broadband Internet traffic experience of users can be improved, and the fixed communication network and the mobile communication network evolved to the 5G ultimate convergence and unification in the later period is prepared.

In the embodiment of the present disclosure, the S/PGW-U is sunk to the aggregation layer of the fixed-mobile bearer IP metropolitan area network to solve the problems of the excessive bearer levels of mobile communication traffic, the traffic detour, the long network delay time, etc. In the meanwhile, the CDN is sunk to the aggregation layer, thereby achieving the flattening transformation of the IPTV network, reducing the total cost of ownership (TCO), improving the transmission efficiency of the network, reducing the maintenance difficulty, maintenance cost of the metropolitan area network, and the impact rate of the malfunction is reduced, and shortening the solution time of failure location.

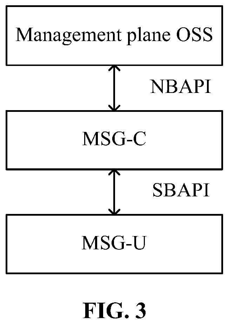

From the preceding content, it can be seen that the embodiment of the present disclosure may be implemented based on the newly added apparatus, MSG, and FIG. 3 is a structural diagram of an MSG. As shown in FIG. 3, the MSG may include an operations support system (OSS), the MSG-C and the MSG-U. The MSG-C may respectively communicate with the management plane OSS and the MSG-U. The MSG-C may perform data interaction with the management plane OSS by a northbound access point interface (NBAPI) protocol, and the MSG-C may perform data interaction with the MSG-U by a southbound access point interface (SBAPI) protocol.

In a practical application, the MSG-C is configured to: receive an external instruction (an external instruction from the OSS) by the northbound interface protocol, and achieve a management control of a user plane of the MSG, and traffic monitoring and traffic configuration of a forwarding plane of the MSG by the southbound interface protocol. In an exemplary disclosure, the MSG-C may achieve the forwarding-control split through the software virtualization.

The MSG-U is configured to acquire traffic configuration information from the MSG-C, and simultaneously report traffic monitoring information of the fixed communication core network user plane apparatus to the fixed communication core network control plane apparatus. In an exemplary disclosure, the MSG-U may acquire the traffic configuration information from the MSG-C through the southbound (SB) interface, and report the traffic monitoring information to the MSG-C in real time to achieve uniform control by the MSG-C. The MSG-U may be achieved by using a high performance traffic board (e.g., an NP).

In an exemplary disclosure, the MSG-C apparatus and the MSG-U apparatus may be arranged separately, and one MSG-C may simultaneously implement control management of one or more MSG-Us.

In the embodiment of the present disclosure, the user plane of the MSG and the control plane of the MSG achieve the forwarding-control split, in this manner, the control plane and the forwarding plane can be completely decoupled, the flexible deployment of traffic is achieved, the CAPEX investment of the operator can be reduced through a separate upgrade of a network element structure, and the flexible development and deployment of the network architecture and the network element structure of the operator are promoted.

### Exemplary disclosure two

On the basis of embodiment one of the present disclosure, this exemplary disclosure will be described exemplarily.

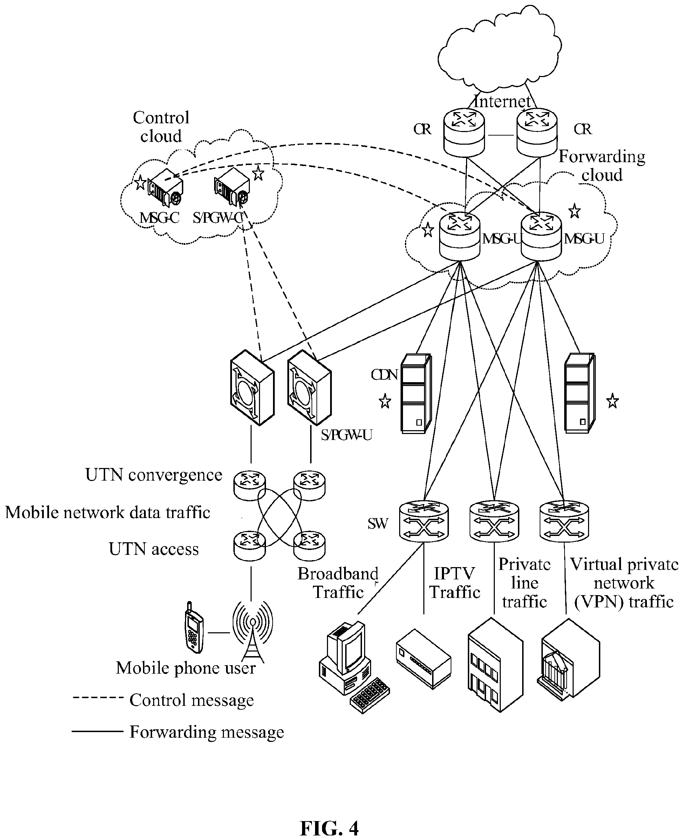

According to the content of the preceding embodiment, FIG. 4 is a schematic diagram of a network architecture of a fixed-mobile coexistence and convergence system. In FIG. 4, the dashed line represents a control message, and the solid line represents a forwarding message. The MSG-C and the S/PGW-C are located in a control cloud, and the MSG-U is located in a forwarding cloud. When a user (such as a mobile phone user) of the mobile communication traffic initiates a network access request, the communication with the S/PGW-U may be achieved based on universal transport network over fiber (UTN) aggregation, mobile network data traffic (referred to as the mobile network data traffic) and a UTN access. The fixed communication traffic may include broadband traffic, IPTV traffic, private line traffic or virtual private network (VPN) traffic. In an exemplary disclosure, the access of the fixed communication traffic may be achieved through the SW. The MSG-U in the forwarding cloud may access the Internet through a core router (CR).

For the above embodiment and the fixed-mobile coexistence and convergence system shown in FIG. 4, an exemplary disclosure provides a network transformation flow of a fixed-mobile coexistence and convergence system.

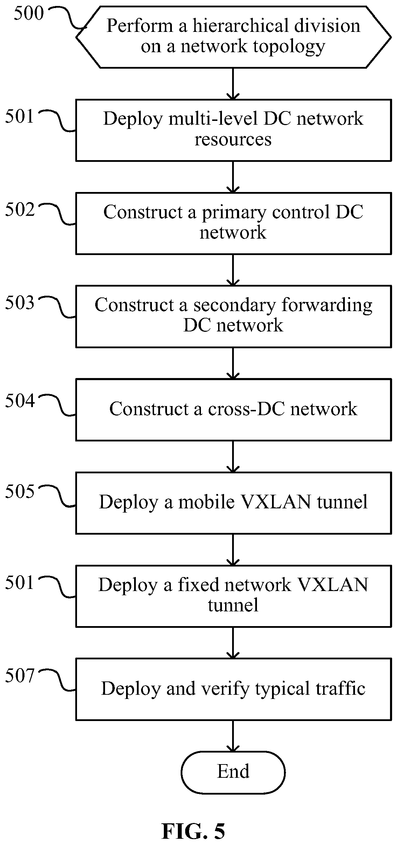

FIG. 5 is a schematic diagram of a network transformation flow of a fixed-mobile coexistence and convergence system. As shown in FIG. 5, the flow may include steps 500 to 507.

In step 500, a hierarchical division is performed on the network topology.

The preparation work is performed, and the hierarchical division is performed on the entire network topology. According to the principle of the forwarding-control split, the network topology is divided into a control plane network and a user plane network, the control plane network is named as a primary control data center (DC), the user plane network is named as a secondary forwarding DC, and an eNB, an IP metropolitan area network and a bearer network between DCs are provided.

In step 501, multi-level DC network resources are deployed.

The deployment planning and traffic planning of multi-level DC internal resources are performed. In an exemplary disclosure, the deployment planning and traffic planning of the DC internal resources involve processing in different network topology hierarchies.

In the exemplary disclosure of the present disclosure, the primary control DC is the control plane network, the S/PGW-C is configured to achieve core network S1-mobility management entity (S1-MME) interface traffic, and the MSG-C is configured to achieve protocol negotiation, user authentication, access control, user management, etc. of a broadband user access. The secondary forwarding DC is the forwarding plane network and includes the S/PGW-U and the MSG-U. In order to get through the user plane traffic, the communication between the S/PGW-U and the MSG-U may be achieved by adding a new SW apparatus. In an exemplary disclosure, the SW apparatus is optional.

In an exemplary disclosure, the communication between the primary control DC and the secondary forwarding DC is achieved through the bearer network, the IP metropolitan area network, etc. The secondary forwarding DC is connected to the Internet through a CR bearer network.

The traffic deployment here includes the traffic deployment of the control plane network and the traffic deployment of the forwarding plane network, respectively. The transmission of the control plane signaling and the management information is born by the VXLAN tunnel. In the transmission of the data forwarding plane, the segment routing (SR) technology may be used for performing encapsulation on data traffic.

In step 502, a primary control DC network is constructed.

In an exemplary disclosure, an internal network of the primary control DC is constructed, and the internal network of the primary control DC includes the S/PGW-C and the MSG-C. The MSG-C needs to deploy an authentication-authorization-accounting (AAA) server and a dynamic host configuration protocol (DHCP) server, which is configured to achieve functions of user identity authentication, identity authorization, IP address acquisition and charging through the AAA. An L3 logical route between a primary control DC apparatus and a secondary forwarding DC apparatus is set up, which may achieve the information transmission at the signaling and management level.

In step 503, a secondary forwarding DC network is constructed.

In an exemplary disclosure, an internal network of the secondary forwarding DC is constructed, and the internal network of the secondary forwarding DC includes the S/PGW-U and the MSG-U. The S/PGW-U and the MSG-U are configured to forward the user plane traffic of the core network and the fixed communication network of the forwarding-control split architecture, and are sunk to the metropolitan area aggregation layer after convergence of the mobile communication network and the fixed communication network.

According to the geographic location difference between the S/PGW-U and the MSG-U, the SW apparatus is considered to be added to complete the data interaction between the S/PGW-U and the MSG-U. The S/PGW-U may not be directly connected to the IP metropolitan area network, but may be transferred through the SW apparatus. Therefore, when the internal network of the secondary forwarding DC is constructed, at least one SW apparatus is added for connecting and interconnecting with an aggregation apparatus of the IP metropolitan area network, the S/PGW-U, and the MSG-U, respectively, so as to achieve the communication among the S/PGW-U, the SW apparatus, the aggregation apparatus of the IP metropolitan area network and the MSG-U.

The MSG-U supports the NAT function and deploys the CDN network. The user acquires the requested CDN video source through an NAT address translation.

In step 504, a cross-DC network is constructed.

In an exemplary disclosure, the cross-DC network construction may be implemented in the manner described below.
1) Deployment of a logical channel, a VXLAN tunnel, between the primary control DC and the secondary forwarding DC.
2) A transmission network of the secondary forwarding DC is interconnected to a transmission network of the IP metropolitan area network. In a practical application, the SW apparatus may be added to achieve S 1-U radio access network (RAN) traffic communication among the IP metropolitan area network, the SW apparatus and the S/PGW-U, in the meanwhile, the SGi interface traffic communication among the S/PGW-U, the SW apparatus and the MSG-U is supported. The deployment of outer layer tunnels may be achieved by using the SR technology.
3) The secondary forwarding DC is interconnected to the bearer network to achieve an access to the Internet.

In step 505, a mobile VXLAN tunnel is deployed.

In an exemplary disclosure, the deployment of the mobile VXLAN tunnel means setting up the mobile communication traffic VXLAN tunnel. The logical communication between the S/PGW-C and the S/PGW-U may be achieved through the set-up of the mobile communication traffic VXLAN tunnel. The premise for establishing the above logical communication is that there is a definite reachable IP route between network elements. After the routing is set up, the mobile communication network VXLAN tunnel is deployed.

In step 506, a fixed network VXLAN tunnel is deployed.

In an exemplary disclosure, the deployment of the fixed network VXLAN tunnel means setting up the fixed communication traffic VXLAN tunnel. The logical communication between the MSG-C and the MSG-U may be achieved through the set-up of the fixed communication traffic VXLAN tunnel. The premise for establishing the above logical communication is that there is a definite reachable IP route between network elements. After the routing is set up, the fixed communication network VXLAN tunnel is deployed.

In step 507, typical traffic is deployed and verified, and the flow ends.

In an exemplary disclosure, the typical traffic may be network convergence traffic. The verification of the network convergence traffic may verify an operation situation of the traffic after the convergence through loading of some basic traffic, thus verifying the feasibility of the network convergence. Exemplarily, the operation reliability of basic traffic of the fixed communication network may be verified through a user authentication by a fixed communication network Internet protocol over Ethernet (IPoE) and a point to point protocol over Ethernet (PPPoE), and the operation feasibility of the mobile network traffic may be verified through the transmission of the mobile S 1-MME signaling message.

So far, the network transformation of the fixed-mobile coexistence and convergence system has been completed, and the fixed-mobile network coexistence and convergence can be achieved.

### Exemplary disclosure three

On the basis of the above embodiment of the present disclosure, this exemplary disclosure will be described exemplarily.

For the fixed-mobile coexistence and convergence system of the above embodiments of the present disclosure, an implementation manner of a uniform bearer of different traffic in the fixed-mobile coexistence and convergence system may be explained by using the following examples.

### Example one

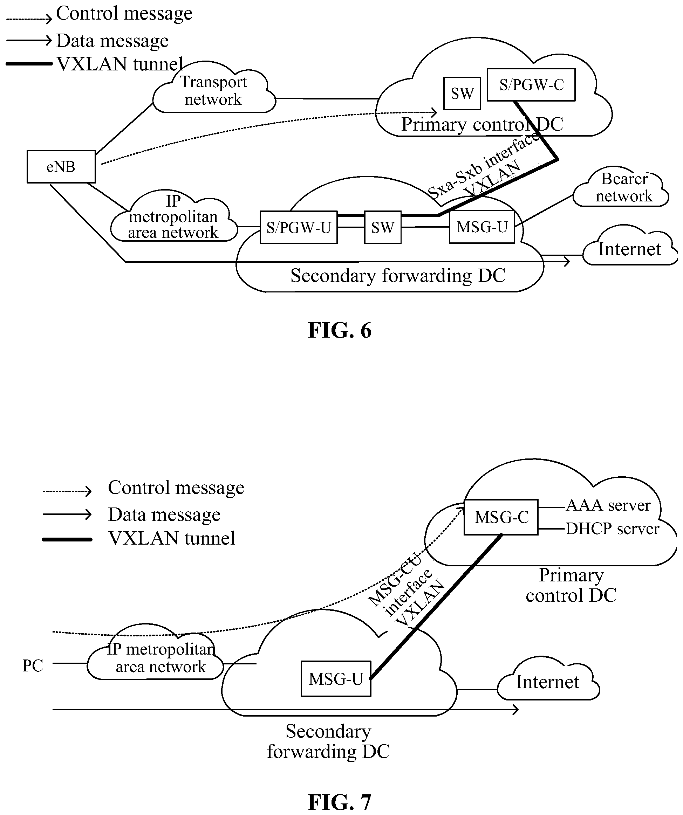

FIG. 6 is a schematic diagram for achieving a bearer for mobile control traffic and data traffic in the fixed-mobile coexistence and convergence system. As shown in FIG. 6, the dashed line with an arrow represents a control message, the solid line with an arrow represents a data message, and the thick solid line represents a VXLAN tunnel.

An eNB may be connected to an S/PGW-C in a primary control DC through an IP bearer network, thereby achieving the bearer of mobile S 1-MME traffic control plane signaling and management traffic.

A three-layer (L3) logical route between the S/PGW-C and an S/PGW-U may be set up.

A first VXLAN tunnel is configured between the S/PGW-C and the S/PGW-U, the first VXLAN tunnel uses a public network address of a metropolitan area network as an end address of the VXLAN tunnel, and the first VXLAN tunnel is configured to bear core network control signaling in the IP metropolitan area network.

An eNodeB user registration authentication process may be implemented by using method one or method two.

Method one: an eNB user registration request passes through the IP metropolitan area network and is connected to the S/PGW-C through the S/PGW-U to complete S1-MME signaling processing, and the signaling processing includes user access authentication, security authentication, mobility control, etc.

Method two: an eNB user registration request is connected to the S/PGW-C via an original transport network (the original transport network in the related art) to perform S 1-MME signaling processing, and the signaling processing includes user access authentication, security authentication, mobility control, etc.

In the exemplary disclosure of the present disclosure, for the eNB user registration authentication processing, the above method one and method two may be a back-up to each other. The exemplary disclosure of the present disclosure may use the method one to achieve the eNB user registration request.

The eNB user data traffic is connected to the S/PGW-U via the IP metropolitan area network and sent to the Internet through the MSG-U to achieve a network access of a mobile user data plane.

In the exemplary disclosure, the bearer of the mobile S 1-MME control traffic and the network access traffic can be completed.

### Example two

FIG. 7 is a schematic diagram for achieving a bearer of broadband user Internet traffic in the fixed-mobile coexistence and convergence system. As shown in FIG. 7, the dashed line with an arrow represents a control message, the solid line with an arrow represents a data message, and the thick solid line represents a VXLAN tunnel.

Referring to the network deployment shown in FIG. 7, a personal computer (PC) of a user may access the IP metropolitan area network and further connect to the MSG-U, so as to achieve a logical connection to the MSG-C.

A three-layer (L3) logical route between the MSG-U and the MSG-C may be set up, thus achieving IP routing reachability.

A second VXLAN tunnel is configured between the MSG-U and the MSG-C, the second VXLAN tunnel uses a public network address of the metropolitan area network as an end address of the VXLAN tunnel, and the second VXLAN tunnel is configured to bear signaling information between the MSG-C and the MSG-U.

A registration request of home user PC broadband traffic connects to the MSG-C via the MSG-U, and the registration authentication of the PPPoE or IPoE user of the home user broadband traffic is completed through the MSG-C deploying an AAA server.

An IP address allocation request of the home user PC broadband traffic connects to the MSG-C via the MSG-U, and the IP address allocation of the home user broadband traffic is completed through the MSG-C deploying a dynamic host configuration protocol (DHCP) server.

After the home user completes the user authentication and the IP address allocation of the broadband traffic, the fixed network home broadband user can access the Internet.

### Example three

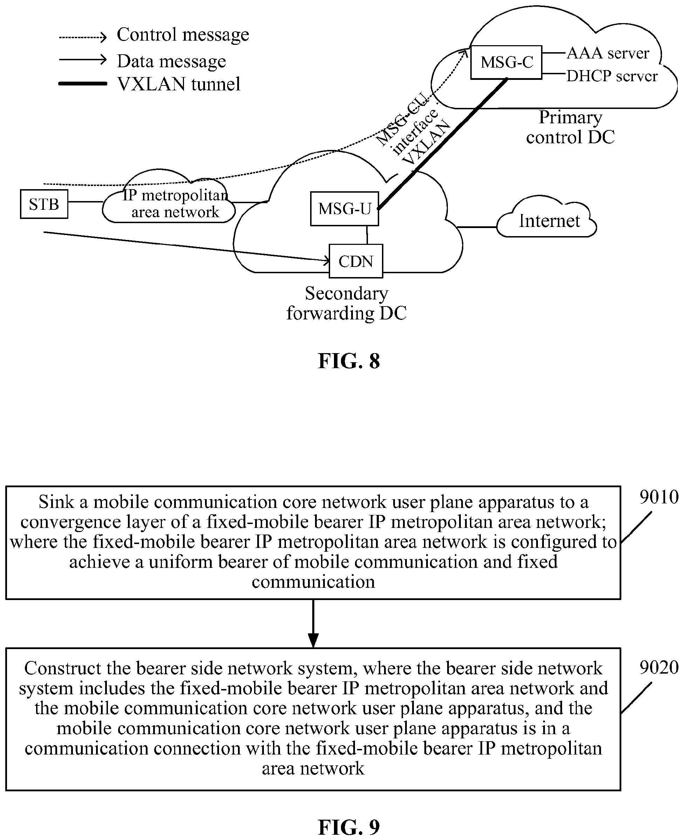

FIG. 8 is a schematic diagram for achieving a bearer of home broadband Internet protocol television (IPTV) traffic in the fixed-mobile coexistence and convergence system. As shown in FIG. 8, the dashed line with an arrow represents a control message, the solid line with an arrow represents a data message, and the thick solid line represents a VXLAN tunnel.

Referring to FIG. 8, a request sent by a set top box (STB) of a home broadband IPTV user may access to an aggregation layer of the metropolitan area network through the IP metropolitan area network and connects to the MSG-U, and the MSG-U apparatus deploys the CDN.

A three-layer (L3) logical route between the MSG-U and the MSG-C may be set up, thus achieving IP routing reachability.

A second VXLAN tunnel is configured between the MSG-U and the MSG-C, the second VXLAN tunnel uses a public network address of the metropolitan area network as an end address of the VXLAN tunnel, and the second VXLAN tunnel is configured to bear IPTV traffic control signaling between the MSG-C and the MSG-U.

A traffic registration request sent by the STB of the home broadband user transmits to the MSG-C via the MSG-U, and the registration authentication of the IPTV user is acquired through the MSG-C deploying the AAA server.

In the traffic request of the set top box of the home broadband user, a request for acquiring an IP address of the IPTV traffic is transmitted to the MSG-C via the MSG-U, and the IP address allocation of the IPTV user is completed through the MSG-C deploying the DHCP server.

After the authentication and the IP address allocation of the IPTV user are completed, a video source in multicast is applied, and the IPTV traffic communication can be completed.

In conclusion, according to examples one to three, the uniform bearer of the mobile communication traffic and the fixed communication traffic can be completed based on the above fixed-mobile coexistence and convergence system.

### Example four

A control plane interface protocol between an MSG-C and an MSG-U is selected according to an actual situation.

The MSG-C may issue VXLAN tunnel traffic configuration information to a forwarding plane of the MSG-U by a NetConf protocol according to traffic requirements.

Protocol messages of different traffic received by the forwarding plane of the MSG-U may be sent through VXLAN message encapsulation to a control plane of the MSG-C for processing.

The control plane of the MSG-C may decapsulate the VXLAN message, performs a uniform allocation on address resources and issues a user forwarding table entry to the forwarding plane of the MSG-U by using an OpenFlow protocol until the user is online, thereby achieving user instance creation and traffic communication requirements between the control plane of the MSG-C and the forwarding plane of the MSG-U.

### Exemplary disclosure four

On the basis of the above embodiment of the present disclosure, this exemplary disclosure will be described exemplarily from the perspective of a bearer side network system alone.

A bearer side network system is provided in the exemplary disclosure and includes a fixed-mobile bearer IP metropolitan area network for achieving a uniform bearer of mobile communication and fixed communication, and a mobile communication core network user plane apparatus sunk to an aggregation layer of the fixed-mobile bearer IP metropolitan area network; and the mobile communication core network user plane apparatus is in a communication connection with the fixed-mobile bearer IP metropolitan area network.

The system further includes a fixed communication core network user plane apparatus sunk to the aggregation layer of the fixed-mobile bearer IP metropolitan area network, and the mobile communication core network user plane apparatus is connected to the fixed communication core network user plane apparatus.

In an exemplary disclosure, the system further includes an SW apparatus, and the mobile communication core network user plane apparatus is connected to the fixed communication core network user plane apparatus through the SW apparatus.

In an exemplary disclosure, the SW apparatus is configured to support pass-through of SGi interface traffic and S 1-U interface traffic of the mobile communication core network user plane apparatus.

A CDN sunk to an aggregation layer of a fixed communication network is deployed at the fixed communication core network user plane apparatus.

The bearer side network system further includes a first backup network, the first backup network and a user plane communication network are configured to operate in an active-backup mode, and the user plane communication network includes at least one of the mobile communication core network user plane apparatus or the fixed communication core network user plane apparatus.

In an exemplary disclosure, the mobile communication core network user plane apparatus includes a PGW and an SGW.

In an exemplary disclosure, the mobile communication core network user plane apparatus is connected to an aggregation network of the fixed-mobile bearer IP metropolitan area network through an S1-U interface of the SGW.

In an exemplary disclosure, the bearer side network system further includes a fixed communication core network user plane apparatus sunk to the aggregation layer of the fixed-mobile bearer IP metropolitan area network, and the mobile communication core network user plane apparatus is connected to the fixed communication core network user plane apparatus through an SGi interface of the PGW.

### Embodiment five

On the basis of the above embodiments of the present disclosure, the embodiment of the present disclosure provides a deployment method for a bearer side network system.

FIG. 9 is a flowchart of a deployment method for a bearer side network system according to an embodiment of the present disclosure. As shown in FIG. 9, the flow may include step 9010 and step 9020.

In step 9010, a mobile communication core network user plane apparatus is sunk to an aggregation layer of a fixed-mobile bearer IP metropolitan area network. The fixed-mobile bearer IP metropolitan area network is configured to achieve a uniform bearer of mobile communication and fixed communication.

In step 9020, the bearer side network system is constructed. The bearer side network system includes the fixed-mobile bearer IP metropolitan area network and the mobile communication core network user plane apparatus, and the mobile communication core network user plane apparatus is in a communication connection with the fixed-mobile bearer IP metropolitan area network.

In an exemplary disclosure, a structure of the bearer side network system and traffic bearing manners of the bearer side network system have been described in the above embodiments.

### Embodiment six

On the basis of the above embodiments of the present disclosure, the embodiment of the present disclosure provides a deployment method for a fixed-mobile coexistence and convergence system.

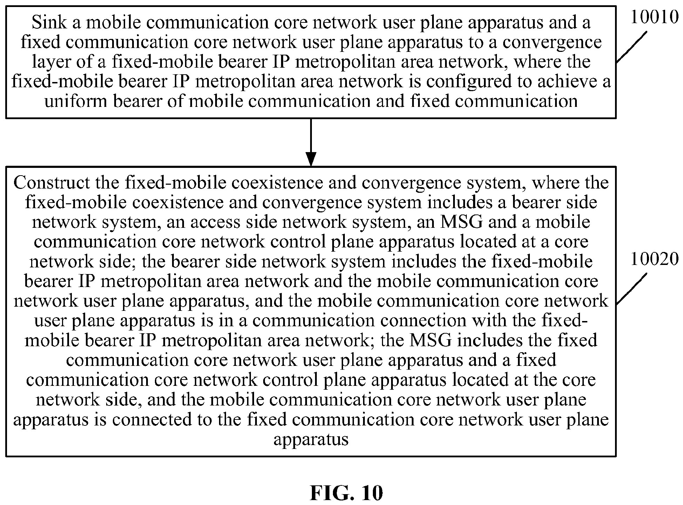

FIG. 10 is a flowchart of a deployment method for a fixed-mobile coexistence and convergence system. As shown in FIG. 10, the flow may include step 10010 and step 10020.

In step 10010, a mobile communication core network user plane apparatus and a fixed communication core network user plane apparatus are sunk to an aggregation layer of a fixed-mobile bearer IP metropolitan area network. The fixed-mobile bearer IP metropolitan area network is configured to achieve a uniform bearer of mobile communication and fixed communication.

In step 10020, the fixed-mobile coexistence and convergence system is constructed. The fixed-mobile coexistence and convergence system includes a bearer side network system, an access side network system, an MSG and a mobile communication core network control plane apparatus located at a core network side, the bearer side network system includes the fixed-mobile bearer IP metropolitan area network and the mobile communication core network user plane apparatus, and the mobile communication core network user plane apparatus is in a communication connection with the fixed-mobile bearer IP metropolitan area network; the MSG includes the fixed communication core network user plane apparatus and a fixed communication core network control plane apparatus located at the core network side, and the mobile communication core network user plane apparatus is connected to the fixed communication core network user plane apparatus.

In an exemplary disclosure, a structure of the fixed-mobile coexistence and convergence system and traffic bearing manners of the fixed-mobile coexistence and convergence system have been described in the above embodiments.

The embodiments of the present disclosure may be provided as methods, systems or computer program products. Therefore, the present disclosure may adopt the form of a hardware embodiment, a software embodiment, or a combination of hardware and software embodiments. In addition, the present disclosure may adopt the form of a computer program product implemented on one or more computer-usable storage media (including a disk memory and an optical memory, etc.) that include computer-usable program codes.

The present disclosure is described with reference to flowcharts and/or block diagrams of methods, devices (systems) and computer program products according to the embodiments of the present disclosure. In an exemplary disclosure, the computer program instructions may be used to implement each flow and/or block in the flowcharts and/or block diagrams and a combination of flows and/or blocks in the flowcharts and/or block diagrams. These computer program instructions may be provided for a general-purpose computer, a special-purpose computer, an embedded processor or a processor of another programmable data processing device to produce a machine so that instructions executed by the computer or the processor of another programmable data processing device produce a device for implementing functions designated in one or more flows in the flowcharts and/or one or more blocks in the block diagrams.

These computer program instructions may also be stored in a computer-readable memory that may cause the computer or another programmable data processing device to operate in a particular manner so that the instructions stored in the computer-readable memory produce a manufactured product including an instructing device. The instructing device implements the functions designated in the one or more flows in the flowcharts and/or the one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions designated in the one or more flows in the flowcharts and/or the one or more blocks in the block diagrams.

## Claims

1. A bearer side network system, comprising: a fixed-mobile bearer Internet protocol, IP, metropolitan area network for achieving a uniform bearer of mobile communication and fixed communication, and a mobile communication core network user plane apparatus sunk to an aggregation layer of the fixed-mobile bearer IP metropolitan area network; wherein the mobile communication core network user plane apparatus is in a communication connection with the fixed-mobile bearer IP metropolitan area network;
wherein the bearer side network further comprises: a fixed communication core network user plane apparatus sunk to the aggregation layer of the fixed-mobile bearer IP metropolitan area network, wherein the mobile communication core network user plane apparatus is connected to the fixed communication core network user plane apparatus;
wherein a content distribution network, CDN, sunk to an aggregation layer of a fixed communication network is deployed at the fixed communication core network user plane apparatus; and
**characterized in that** the bearer side network system further comprises: a first backup network, wherein
the first backup network and a user plane communication network are configured to operate in an active-backup mode, and the user plane communication network comprises at least one of the mobile communication core network user plane apparatus or the fixed communication core network user plane apparatus.

2. The system of claim 1, further comprising: a switch, SW, apparatus; wherein the mobile communication core network user plane apparatus is connected to the fixed communication core network user plane apparatus through the SW apparatus;
wherein the SW apparatus is configured to support pass-through of SGi interface traffic and S1-user plane, S 1-U, interface traffic of the mobile communication core network user plane apparatus.

3. The system of claim 1, wherein the mobile communication core network user plane apparatus comprises a public data network gateway, PGW, and a service gateway, SGW;
wherein the mobile communication core network user plane apparatus is connected to an aggregation network of the fixed-mobile bearer IP metropolitan area network through an S1-U interface of the SGW;
wherein the system further comprises: a fixed communication core network user plane apparatus sunk to the aggregation layer of the fixed-mobile bearer IP metropolitan area network, wherein the mobile communication core network user plane apparatus is connected to the fixed communication core network user plane apparatus through an SGi interface of the PGW.

4. A fixed-mobile coexistence and convergence system, comprising: the bearer side network system of claim 1, an access side network system, a multi-service gateway, MSG, apparatus and a mobile communication core network control plane apparatus located at a core network side; wherein the MSG comprises a fixed communication core network user plane apparatus sunk to the aggregation layer of the fixed-mobile bearer Internet protocol, IP, metropolitan area network and a fixed communication core network control plane apparatus located at the core network side, and the mobile communication core network user plane apparatus comprised in the bearer side network system is connected to the fixed communication core network user plane apparatus.

5. The system of claim 4, wherein the bearer side network system further comprises a switch, SW, apparatus, and the mobile communication core network user plane apparatus is connected to the fixed communication core network user plane apparatus through the SW apparatus; wherein the SW apparatus is configured to support pass-through of SGi interface traffic and S1-user plane, S1-U, interface traffic of the mobile communication core network user plane apparatus.

6. The system of claim 4, further comprising: a second backup network, wherein the second backup network and a control plane communication network are configured to operate in an active-backup mode, and the control plane communication network comprises at least one of the mobile communication core network control plane apparatus or the fixed communication core network control plane apparatus.

7. The system of claim 4, wherein the mobile communication core network user plane apparatus comprises a public data network gateway, PGW, and a service gateway, SGW;
wherein the mobile communication core network user plane apparatus is connected to an aggregation network of the fixed-mobile bearer IP metropolitan area network through an S1-U interface of the SGW;
wherein the mobile communication core network user plane apparatus is connected to the fixed communication core network user plane apparatus through an SGi interface of the PGW.

8. The system of claim 4, wherein the fixed communication core network user plane apparatus and the fixed communication core network control plane apparatus in the MSG are configured to be achieved by using a forwarding-control split architecture;
wherein the forwarding-control split architecture is achieved based on a software defined network, SDN, and a network function virtualization, NFV;
wherein the MSG supports a network address transport, NAT, function; and the MSG is a virtual broadband network gateway, vBNG, apparatus;
wherein the fixed communication core network control plane apparatus is configured to receive an external instruction by a northbound interface protocol and achieve management control of a user plane of the MSG, and traffic monitoring and traffic configuration of a forwarding plane of the MSG by a southbound interface protocol;
wherein the fixed communication core network user plane apparatus is configured to acquire traffic configuration information from the fixed communication core network control plane apparatus and simultaneously report traffic monitoring information of the fixed communication core network user plane apparatus to the fixed communication core network control plane apparatus.

9. The system of claim 4, wherein a three-layer logical route in a connected state exists between the mobile communication core network control plane apparatus and the mobile communication core network user plane apparatus;
wherein a first virtual extensible local area network, VXLAN, tunnel is established between the mobile communication core network control plane apparatus and the mobile communication core network user plane apparatus, and the first VXLAN tunnel is configured to achieve information transmission of a management channel and mobile communication signaling.

10. The system of claim 4, wherein a three-layer logical route in a connected state exists between the fixed communication core network control plane apparatus and the fixed communication core network user plane apparatus;
wherein a second VXLAN tunnel is established between the fixed communication core network control plane apparatus and the fixed communication core network user plane apparatus, and the second VXLAN tunnel is configured to achieve information transmission of a management channel and fixed communication network traffic signaling.

11. The system of claim 10, wherein the fixed communication core network control plane apparatus is configured to issue VXLAN tunnel traffic configuration information to the fixed communication core network user plane apparatus by a network configuration, NetConf, protocol;
wherein the fixed communication core network user plane apparatus is configured to perform a VXLAN message encapsulation on a received protocol message and send a VXLAN message obtained by the encapsulation to the fixed communication core network control plane apparatus;
wherein the fixed communication core network control plane apparatus is configured to decapsulate the VXLAN message, perform a uniform allocation on address resources and issue a user forwarding table entry to the fixed communication core network user plane apparatus by using an OpenFlow protocol.

12. A deployment method for a bearer side network system, comprising:
sinking (9010) a mobile communication core network user plane apparatus to an aggregation layer of a fixed-mobile bearer Internet protocol, IP, metropolitan area network; wherein the fixed-mobile bearer IP metropolitan area network is configured to achieve a uniform bearer of mobile communication and fixed communication; and
constructing (9020) the bearer side network system, wherein the bearer side network system comprises the fixed-mobile bearer IP metropolitan area network and the mobile communication core network user plane apparatus, and the mobile communication core network user plane apparatus is in a communication connection with the fixed-mobile bearer IP metropolitan area network;
wherein the bearer side network system further comprises: a fixed communication core network user plane apparatus sunk to the aggregation layer of the fixed-mobile bearer IP metropolitan area network, wherein the mobile communication core network user plane apparatus is connected to the fixed communication core network user plane apparatus;
wherein a content distribution network, CDN, sunk to an aggregation layer of a fixed communication network is deployed at the fixed communication core network user plane apparatus; and
**characterized in that** the bearer side network system further comprises: a first backup network, wherein the first backup network and a user plane communication network are configured to operate in an active-backup mode, and the user plane communication network comprises at least one of the mobile communication core network user plane apparatus or the fixed communication core network user plane apparatus.

13. A deployment method for a fixed-mobile coexistence and convergence system, comprising:
sinking (10010) a mobile communication core network user plane apparatus and a fixed communication core network user plane apparatus to an aggregation layer of a fixed-mobile bearer Internet protocol, IP, metropolitan area network, wherein the fixed-mobile bearer IP metropolitan area network is configured to achieve a uniform bearer of mobile communication and fixed communication; and
constructing (10020) the fixed-mobile coexistence and convergence system, wherein the fixed-mobile coexistence and convergence system comprises a bearer side network system, an access side network system, a multi-service gateway, MSG, apparatus and a mobile communication core network control plane apparatus located at a core network side; the bearer side network system comprises the fixed-mobile bearer IP metropolitan area network and the mobile communication core network user plane apparatus, and the mobile communication core network user plane apparatus is in a communication connection with the fixed-mobile bearer IP metropolitan area network; the MSG comprises the fixed communication core network user plane apparatus and a fixed communication core network control plane apparatus located at the core network side, and the mobile communication core network user plane apparatus is connected to the fixed communication core network user plane apparatus;
wherein a content distribution network, CDN, sunk to an aggregation layer of a fixed communication network is deployed at the fixed communication core network user plane apparatus; and
**characterized in that** the system further comprises: a first backup network, wherein the first backup network and a user plane communication network are configured to operate in an active-backup mode, and the user plane communication network comprises at least one of the mobile communication core network user plane apparatus or the fixed communication core network user plane apparatus.

## Patentansprüche

1. Trägerseitiges Netzwerksystem, das Folgendes umfasst: ein Internetprotokoll(IP)-Stadtgebietsnetzwerk mit festem mobilem Träger zum Erreichen eines einheitlichen Trägers für eine mobile Kommunikation und eine feste Kommunikation und einer auf eine Aggregationsschicht des IP-Stadtgebietsnetzwerks mit festem mobilem Träger abgesenkten Benutzerebenenvorrichtung für mobile Kommunikation in einem Kernnetzwerk; wobei sich die Benutzerebenenvorrichtung für mobile Kommunikation in einem Kernnetzwerk mit dem IP-Stadtgebietsnetzwerk mit festem mobilem Träger in einer Kommunikationsverbindung befindet;
wobei das trägerseitige Netzwerk ferner Folgendes umfasst: eine auf die Aggregationsschicht des IP-Stadtgebietsnetzwerks mit festem mobilem Träger abgesenkte Benutzerebenenvorrichtung für mobile Kommunikation in einem Kernnetzwerk, wobei die Benutzerebenenvorrichtung für mobile Kommunikation in einem Kernnetzwerk mit der Benutzerebenenvorrichtung für feste Kommunikation in einem Kernnetzwerk verbunden ist;
wobei ein auf eine Aggregationsschicht eines festen Kommunikationsnetzwerks abgesenktes Inhaltsverteilungsnetzwerk, CDN, an der Benutzerebenenvorrichtung für feste Kommunikation in einem Kernnetzwerk eingesetzt ist; und
**dadurch gekennzeichnet, dass** das trägerseitige Netzwerksystem ferner Folgendes umfasst: ein erstes Backupnetzwerk, wobei
das erste Backupnetzwerk und ein Benutzerebenenkommunikationsnetzwerk dazu ausgelegt sind, in einem aktiven Backupmodus betrieben zu werden, und das Benutzerebenenkommunikationsnetzwerk mindestens eine der Benutzerebenenvorrichtung für mobile Kommunikation in einem Kernnetzwerk oder der Benutzerebenenvorrichtung für feste Kommunikation in einem Kernnetzwerk umfasst.

2. System nach Anspruch 1, das ferner Folgendes umfasst: eine Schalt(SW)-Vorrichtung; wobei die Benutzerebenenvorrichtung für mobile Kommunikation in einem Kernnetzwerk über die SW-Vorrichtung mit der Benutzerebenenvorrichtung für feste Kommunikation in einem Kernnetzwerk verbunden ist;
wobei die SW-Vorrichtung dazu ausgelegt ist, ein Durchleiten von SGi-Schnittstellenverkehr und von S1-Benutzerebenen(S1-U)-Schnittstellenverkehr der Benutzerebenenvorrichtung für mobile Kommunikation in einem Kernnetzwerk zu unterstützen.

3. System nach Anspruch 1, wobei die Benutzerebenenvorrichtung für mobile Kommunikation in einem Kernnetzwerk ein öffentliches Datennetzwerkgateway, PGW, und ein Dienstgateway, SGW, umfasst;
wobei die Benutzerebenenvorrichtung für mobile Kommunikation in einem Kernnetzwerk über eine S1-U-Schnittstelle des SGW mit einem Aggregationsnetzwerk des IP-Stadtgebietsnetzwerks mit festem mobilem Träger verbunden ist;
wobei das System ferner Folgendes umfasst: eine auf die Aggregationsschicht des IP-Stadtgebietsnetzwerks mit festem mobilem Träger abgesenkte Benutzerebenenvorrichtung für mobile Kommunikation in einem Kernnetzwerk, wobei die Benutzerebenenvorrichtung für mobile Kommunikation in einem Kernnetzwerk über eine SGi-Schnittstelle des PGW mit der Benutzerebenenvorrichtung für feste Kommunikation in einem Kernnetzwerk verbunden ist.

4. Festes mobiles Koexistenz- und Konvergenzsystem, das Folgendes umfasst: ein trägerseitiges Netzwerksystem nach Anspruch 1, ein zugangsseitiges Netzwerksystem, eine Multidienstgateway(MSG)-Vorrichtung und eine Steuerebenenvorrichtung für eine mobile Kommunikation in einem Kernnetzwerk, die sich auf einer Kernnetzwerkseite befindet;
wobei das MSG eine auf die Aggregationsschicht des Internetprotokoll(IP)-Stadtgebietsnetzwerks mit festem mobilem Träger abgesenkte Benutzerebenenvorrichtung für feste Kommunikation in einem Kernnetzwerk und eine Steuerebenenvorrichtung für eine feste Kommunikation in einem Kernnetzwerk umfasst, die sich auf der Kernnetzwerkseite befindet, und die Benutzerebenenvorrichtung für mobile Kommunikation in einem Kernnetzwerk, die im trägerseitigen Netzwerksystem umfasst ist, mit der Benutzerebenenvorrichtung für feste Kommunikation in einem Kernnetzwerk verbunden ist.

5. System nach Anspruch 4, wobei das trägerseitige Netzwerksystem ferner eine Schalt(SW)-Vorrichtung umfasst und die Benutzerebenenvorrichtung für mobile Kommunikation in einem Kernnetzwerk über die SW-Vorrichtung mit der Benutzerebenenvorrichtung für feste Kommunikation in einem Kernnetzwerk verbunden ist; wobei die SW-Vorrichtung dazu ausgelegt ist, ein Durchleiten von SGi-Schnittstellenverkehr und S1-Benutzerebenen(S1-U)-Schnittstellenverkehr der Benutzerebenenvorrichtung für mobile Kommunikation in einem Kernnetzwerk zu unterstützen.

6. System nach Anspruch 4, das ferner Folgendes umfasst: ein zweites Backupnetzwerk, wobei das zweite Backupnetzwerk und ein Steuerebenenkommunikationsnetzwerk dazu ausgelegt sind, in einem aktiven Backupmodus betrieben zu werden, und das Steuerebenenkommunikationsnetzwerk mindestens eine der Steuerebenenvorrichtung für mobile Kommunikation in einem Kernnetzwerk oder der Steuerebenenvorrichtung für feste Kommunikation in einem Kernnetzwerk umfasst.

7. System nach Anspruch 4, wobei die Benutzerebenenvorrichtung für mobile Kommunikation in einem Kernnetzwerk ein öffentliches Datennetzwerkgateway, PGW, und ein Dienstgateway, SGW, umfasst;
wobei die Benutzerebenenvorrichtung für mobile Kommunikation in einem Kernnetzwerk über eine S1-U-Schnittstelle des SGW mit einem Aggregationsnetzwerk des IP-Stadtgebietsnetzwerks mit festem mobilem Träger verbunden ist;
wobei die Benutzerebenenvorrichtung für mobile Kommunikation in einem Kernnetzwerk über eine SGi-Schnittstelle des PGW mit der Benutzerebenenvorrichtung für feste Kommunikation in einem Kernnetzwerk verbunden ist.

8. System nach Anspruch 4, wobei die Benutzerebenenvorrichtung für feste Kommunikation in einem Kernnetzwerk und die Steuerebenenvorrichtung für feste Kommunikation in einem Kernnetzwerk im MSG dazu ausgelegt sind, unter Verwendung einer Forwarding-Control-Split-Architektur erreicht zu werden;
wobei die Forwarding-Control-Split-Architektur auf Basis eines softwaredefinierten Netzwerks, SDN, und einer Netzwerkfunktionsvirtualisierung, NFV, erreicht wird;
wobei das MSG eine Netzwerkadressentransport(NAT)-Funktion unterstützt und das MSG eine virtuelle Breitbandnetzwerkgateway(vBNG)-Vorrichtung ist;
wobei die Steuerebenenvorrichtung für feste Kommunikation in einem Kernnetzwerk dazu ausgelegt ist, von einem nordwärtigen Schnittstellenprotokoll eine externe Anweisung zu empfangen und eine Verwaltungssteuerung einer Benutzerebene des MSG und eine Verkehrsüberwachung und eine Verkehrsauslegung einer Weiterleitungsebene des MSG durch ein südwärtiges Schnittstellenprotokoll zu erreichen;
wobei die Benutzerebenenvorrichtung für feste Kommunikation in einem Kernnetzwerk dazu ausgelegt ist, Verkehrsauslegungsinformationen von der Steuerebenenvorrichtung für feste Kommunikation in einem Kernnetzwerk zu erfassen und gleichzeitig Verkehrsüberwachungsinformationen der Steuerebenenvorrichtung für feste Kommunikation in einem Kernnetzwerk bei der Steuerebenenvorrichtung für feste Kommunikation in einem Kernnetzwerk zu melden.

9. System nach Anspruch 4, wobei zwischen der Steuerebenenvorrichtung für mobile Kommunikation in einem Kernnetzwerk und der Benutzerebenenvorrichtung für mobile Kommunikation in einem Kernnetzwerk eine logische Route mit drei Schichten in einem Verbindungszustand existiert;
wobei zwischen der Steuerebenenvorrichtung für mobile Kommunikation in einem Kernnetzwerk und der Benutzerebenenvorrichtung für mobile Kommunikation in einem Kernnetzwerk ein erster virtueller erweiterbarer Tunnel für ein lokales Netzwerk, VXLAN, eingerichtet ist und der erste VXLAN-Tunnel dazu ausgelegt ist, eine Informationsübertragung eines Verwaltungskanals und eine mobile Kommunikationssignalisierung zu erreichen.

10. System nach Anspruch 4, wobei zwischen der Steuerebenenvorrichtung für feste Kommunikation in einem Kernnetzwerk und der Benutzerebenenvorrichtung für feste Kommunikation in einem Kernnetzwerk eine logische Route mit drei Schichten in einem Verbindungszustand existiert;
wobei zwischen der Steuerebenenvorrichtung für feste Kommunikation in einem Kernnetzwerk und der Benutzerebenenvorrichtung für feste Kommunikation in einem Kernnetzwerk ein zweiter VXLAN-Tunnel eingerichtet ist und der zweite VXLAN-Tunnel dazu ausgelegt ist, eine Informationsübertragung eines Verwaltungskanals und eine Netzwerkverkehrssignalisierung für feste Kommunikation zu erreichen.

11. System nach Anspruch 10, wobei die Steuerebenenvorrichtung für feste Kommunikation in einem Kernnetzwerk dazu ausgelegt ist, Verkehrsauslegungsinformationen für den VXLAN-Tunnel für die Benutzerebenenvorrichtung für feste Kommunikation in einem Kernnetzwerk durch ein Netzwerkauslegungs(NetConf)-Protokoll auszugeben;
wobei die Benutzerebenenvorrichtung für feste Kommunikation in einem Kernnetzwerk dazu ausgelegt ist, eine VXLAN-Nachrichtenkapselung an einer empfangenen Protokollnachricht durchzuführen und eine durch die Kapselung erhaltene VXLAN-Nachricht an die Steuerebenenvorrichtung für feste Kommunikation in einem Kernnetzwerk zu senden;
wobei die Steuerebenenvorrichtung für feste Kommunikation in einem Kernnetzwerk dazu ausgelegt ist, die Kapselung der VXLAN- Nachricht aufzuheben, eine einheitliche Zuteilung von Adressressourcen durchzuführen und einen Tabelleneintrag für eine Benutzerweiterleitung unter Verwendung eines OpemFlow-Protokolls an die Benutzerebenenvorrichtung für feste Kommunikation in einem Kernnetzwerk auszugeben.

12. Einsatzverfahren für ein trägerseitiges Netzwerksystem, das Folgendes umfasst:
Absenken (9010) einer Benutzerebenenvorrichtung für mobile Kommunikation in einem Kernnetzwerk auf eine Aggregationsschicht eines Internetprotokoll(IP)-Stadtgebietsnetzwerks mit festem mobilem Träger; wobei das IP-Stadtgebietsnetzwerk mit festem mobilem Träger dazu ausgelegt ist, einen einheitlichen Träger für mobile Kommunikation und feste Kommunikation zu erreichen; und
Konstruieren (9020) des trägerseitigen Netzwerksystems, wobei das trägerseitige Netzwerksystem das IP-Stadtgebietsnetzwerk mit festem mobilem Träger und die Benutzerebenenvorrichtung für mobile Kommunikation in einem Kernnetzwerk umfasst und sich die Benutzerebenenvorrichtung für mobile Kommunikation in einem Kernnetzwerk mit dem IP-Stadtgebietsnetzwerk mit festem mobilem Träger in einer Kommunikationsverbindung befindet;
wobei das trägerseitige Netzwerksystem ferner Folgendes umfasst: eine auf die Aggregationsschicht des IP-Stadtgebietsnetzwerks mit festem mobilem Träger abgesenkte Benutzerebenenvorrichtung für mobile Kommunikation in einem Kernnetzwerk, wobei die Benutzerebenenvorrichtung für mobile Kommunikation in einem Kernnetzwerk mit der Benutzerebenenvorrichtung für feste Kommunikation in einem Kernnetzwerk verbunden ist;
wobei ein auf eine Aggregationsschicht eines festen Kommunikationsnetzwerks abgesenktes Inhaltsverteilungsnetzwerk, CDN, an der Benutzerebenenvorrichtung für feste Kommunikation in einem Kernnetzwerk eingesetzt ist; und
**dadurch gekennzeichnet, dass** das trägerseitige Netzwerksystem ferner Folgendes umfasst: ein erstes Backupnetzwerk, wobei das erste Backupnetzwerk und ein Benutzerebenenkommunikationsnetzwerk dazu ausgelegt sind, in einem aktiven Backupmodus betrieben zu werden, und das Benutzerebenenkommunikationsnetzwerk mindestens eine der Benutzerebenenvorrichtung für mobile Kommunikation in einem Kernnetzwerk oder der Benutzerebenenvorrichtung für feste Kommunikation in einem Kernnetzwerk umfasst.

13. Einsatzverfahren für ein festes mobiles Koexistenz- und Konvergenzsystem, das Folgendes umfasst:
Absenken (10010) einer Benutzerebenenvorrichtung für mobile Kommunikation in einem Kernnetzwerk und einer Benutzerebenenvorrichtung für feste Kommunikation in einem Kernnetzwerk auf eine Aggregationsschicht eines Internetprotokoll(IP)-Stadtgebietsnetzwerks mit festem mobilem Träger, wobei das IP-Stadtgebietsnetzwerk mit festem mobilem Träger dazu ausgelegt ist, einen einheitlichen Träger für mobile Kommunikation und feste Kommunikation zu erreichen; und
Konstruieren (10020) des festen mobilen Koexistenz- und Konvergenzsystems, wobei das feste mobile Koexistenz- und Konvergenzsystem ein trägerseitiges Netzwerksystem, ein zugangsseitiges Netzwerksystem, eine Multidienstgateway(MSG)-Vorrichtung und eine Steuerebenenvorrichtung für mobile Kommunikation in einem Kernnetzwerk umfasst, die sich auf einer Kernnetzwerkseite befindet; das trägerseitige Netzwerksystem das IP-Stadtgebietsnetzwerk für feste mobile Träger und die Benutzerebenenvorrichtung für mobile Kommunikation in einem Kernnetzwerk umfasst und die Benutzerebenenvorrichtung für mobile Kommunikation in einem Kernnetzwerk sich mit dem IP-Stadtgebietsnetzwerk mit festem mobilem Träger in einer Kommunikationsverbindung befindet, das MSG die Benutzerebenenvorrichtung für feste Kommunikation in einem Kernnetzwerk und eine Steuerebenenvorrichtung für feste Kommunikation in einem Kernnetzwerk umfasst, die sich auf der Kernnetzwerkseite befindet, und die Benutzerebenenvorrichtung für mobile Kommunikation in einem Kernnetzwerk mit der Benutzerebenenvorrichtung für feste Kommunikation in einem Kernnetzwerk verbunden ist;
wobei ein auf eine Aggregationsschicht eines festen Kommunikationsnetzwerks abgesenktes Inhaltsverteilungsnetzwerk, CDN, an der Benutzerebenenvorrichtung für feste Kommunikation in einem Kernnetzwerk eingesetzt ist; und
**dadurch gekennzeichnet, dass** das System ferner Folgendes umfasst: ein erstes Backupnetzwerk, wobei das erste Backupnetzwerk und ein Benutzerebenenkommunikationsnetzwerk dazu ausgelegt sind, in einem aktiven Backupmodus betrieben zu werden, und das Benutzerebenenkommunikationsnetzwerk mindestens eine der Benutzerebenenvorrichtung für mobile Kommunikation in einem Kernnetzwerk oder der Benutzerebenenvorrichtung für feste Kommunikation in einem Kernnetzwerk umfasst.

## Revendications

1. Un système de réseau côté support, comprenant : un réseau métropolitain IP à support fixe-mobile pour réaliser un support uniforme de communication mobile et de communication fixe, et un appareil de plan d'utilisateur de réseau central de communication mobile intégré à une couche d'agrégation du réseau métropolitain IP à support fixe-mobile ; dans lequel l'appareil de plan d'utilisateur de réseau central de communication mobile est en connexion de communication avec le réseau métropolitain IP à support fixe-mobile ;
dans lequel le réseau côté support comprend en outre : un appareil de plan d'utilisateur de réseau central de communication fixe intégré à la couche d'agrégation du réseau métropolitain IP à support fixe-mobile, dans lequel l'appareil de plan d'utilisateur de réseau central de communication mobile est connecté à l'appareil de plan d'utilisateur de réseau central de communication fixe ;
dans lequel un réseau de distribution de contenu, CDN, intégré à une couche d'agrégation d'un réseau de communication fixe est déployé au niveau de l'appareil du plan utilisateur du réseau central de communication fixe ; et
**caractérisé par le fait que** le système de réseau côté support comprend en outre : un premier réseau de secours, dans lequel le premier réseau de secours et un réseau de communication du plan utilisateur sont configurés pour fonctionner dans un mode de secours actif, et le réseau de communication du plan utilisateur comprend au moins l'un des appareils du plan utilisateur du réseau central de communication mobile ou de l'appareil du plan utilisateur du réseau central de communication fixe.

2. Le système de la revendication 1, comprenant en outre : un appareil de commutation, SW, dans lequel l'appareil de plan d'utilisateur du réseau central de communication mobile est connecté à l'appareil de plan d'utilisateur du réseau central de communication fixe par l'intermédiaire de l'appareil SW ;
dans lequel l'appareil SW est configuré pour prendre en charge le trafic d'interface SGi et le trafic d'interface de plan d'utilisateur S1, S1-U, de l'appareil de plan d'utilisateur de coeur de réseau de communication mobile.

3. Le système de la revendication 1, dans lequel l'appareil du plan utilisateur du réseau central de communication mobile comprend une passerelle de réseau de données public, PGW, et une passerelle de service, SGW ;
dans lequel l'appareil du plan utilisateur du réseau central de communication mobile est connecté à un réseau d'agrégation du réseau métropolitain IP à support fixe-mobile par l'intermédiaire d'une interface S 1-U du SGW ;
dans lequel le système comprend en outre : un appareil de plan d'utilisateur de réseau central de communication fixe intégré à la couche d'agrégation du réseau métropolitain IP à support fixe-mobile, l'appareil de plan d'utilisateur de réseau central de communication mobile étant connecté à l'appareil de plan d'utilisateur de réseau central de communication fixe par l'intermédiaire d'une interface SGi du PGW.

4. Système de coexistence et de convergence fixe-mobile, comprenant : le système de réseau côté support de la revendication 1, un système de réseau côté accès, un appareil de passerelle multiservice, MSG, et un appareil de plan de contrôle du réseau central de communication mobile situé du côté du réseau central ; dans lequel le MSG comprend un appareil de plan d'utilisateur de réseau central de communication fixe intégré à la couche d'agrégation du réseau métropolitain IP de support fixe-mobile et un appareil de plan de contrôle du réseau central de communication fixe situé du côté du réseau central, et l'appareil de plan d'utilisateur du réseau central de communication mobile compris dans le système de réseau côté support est connecté à l'appareil de plan d'utilisateur du réseau central de communication fixe.

5. Le système de la revendication 4, dans lequel le système de réseau côté support comprend en outre un appareil de commutation, SW, et l'appareil de plan d'utilisateur du réseau central de communication mobile est connecté à l'appareil de plan d'utilisateur du réseau central de communication fixe par l'intermédiaire de l'appareil SW ; dans lequel l'appareil SW est configuré pour prendre en charge le trafic d'interface SGi et le trafic d'interface de plan d'utilisateur S1, S1 - U, de l'appareil de plan d'utilisateur du réseau central de communication mobile.

6. Le système de la revendication 4, comprenant en outre : un deuxième réseau de secours, dans lequel le deuxième réseau de secours et un réseau de communication du plan de contrôle sont configurés pour fonctionner dans un mode de secours actif, et le réseau de communication du plan de contrôle comprend au moins l'un des appareils du plan de contrôle du réseau central de communication mobile ou de l'appareil du plan de contrôle du réseau central de communication fixe.

7. Le système de la revendication 4, dans lequel l'appareil du plan utilisateur du réseau central de communication mobile comprend une passerelle de réseau de données public, PGW et une passerelle de service, SGW ;
dans lequel l'appareil du plan utilisateur du réseau central de communication mobile est connecté à un réseau d'agrégation du réseau métropolitain IP à support fixe-mobile par l'intermédiaire d'une interface S 1-U du SGW ;
dans lequel l'appareil de plan d'utilisateur du réseau central de communication mobile est connecté à l'appareil de plan d'utilisateur du réseau central de communication fixe par l'intermédiaire d'une interface SGi du PGW.

8. Le système de la revendication 4, dans lequel l'appareil du plan utilisateur du réseau central de communication fixe et l'appareil du plan de contrôle du réseau central de communication fixe dans le MSG sont configurés pour être réalisés à l'aide d'une architecture divisée d'acheminement-contrôle;
dans lequel l'architecture divisée d'acheminement-contrôle est réalisée sur la base d'un réseau défini par logiciel, SDN, et d'une virtualisation de fonction de réseau, NFV ;
dans lequel le MSG prend en charge une fonction de transport d'adresses réseau, NAT ; et dans lequel le MSG est un appareil de passerelle de réseau virtuel à large bande, vBNG ;
dans lequel l'appareil du plan de contrôle du réseau central de communication fixe est configuré pour recevoir une instruction externe par un protocole d'interface nord et réaliser le contrôle de gestion d'un plan utilisateur du MSG, ainsi que la surveillance du trafic et la configuration du trafic d'un plan d'acheminement du MSG par un protocole d'interface sud ;
l'appareil du plan utilisateur du réseau central de communication fixe est configuré pour acquérir des informations de configuration du trafic à partir de l'appareil du plan de contrôle du réseau central de communication fixe et signaler simultanément les informations de surveillance du trafic de l'appareil du plan utilisateur du réseau central de communication fixe à l'appareil du plan de contrôle du réseau central de communication fixe.

9. Le système de la revendication 4, dans lequel une route logique à trois couches dans un état connecté existe entre l'appareil du plan de contrôle du réseau central de communication mobile et l'appareil du plan utilisateur du réseau central de communication mobile ;
dans lequel un premier tunnel de réseau local extensible virtuel, VXLAN, est établi entre l'appareil du plan de contrôle du réseau central de communication mobile et l'appareil du plan utilisateur du réseau central de communication mobile, et le premier tunnel VXLAN est configuré pour assurer la transmission d'informations d'un canal de gestion et d'une signalisation de communication mobile.

10. Le système de la revendication 4, dans lequel une route logique à trois couches dans un état connecté existe entre l'appareil du plan de contrôle du réseau central de communication fixe et l'appareil du plan utilisateur du réseau central de communication fixe ;
dans lequel un deuxième tunnel VXLAN est établi entre l'appareil du plan de contrôle du réseau central de communication fixe et l'appareil du plan utilisateur du réseau central de communication fixe, et le deuxième tunnel VXLAN est configuré pour réaliser la transmission d'informations d'un canal de gestion et d'une signalisation de trafic de réseau de communication fixe.

11. Le système de la revendication 10, dans lequel l'appareil du plan de contrôle du réseau central de communication fixe est configuré pour émettre des informations de configuration du trafic du tunnel VXLAN à l'appareil du plan utilisateur du réseau central de communication fixe par un protocole de configuration de réseau, NetConf ;
dans lequel l'appareil du plan utilisateur du réseau central de communication fixe est configuré pour effectuer une encapsulation de message VXLAN sur un message de protocole reçu et envoyer un message VXLAN obtenu par l'encapsulation à l'appareil du plan de contrôle du réseau central de communication fixe ;
dans lequel l'appareil du plan de contrôle du réseau central de communication fixe est configuré pour décapsuler le message VXLAN, effectuer une allocation uniforme sur les ressources d'adresse et émettre une entrée de table de transfert utilisateur vers l'appareil du plan utilisateur du réseau central de communication fixe à l'aide d'un protocole OpenFlow.

12. Méthode de déploiement d'un système de réseau côté support, comprenant :
l'intégration (9010) d'un appareil de plan utilisateur de réseau central de communication mobile dans une couche d'agrégation d'un réseau métropolitain IP à support fixe-mobile ; le réseau métropolitain IP à support fixe-mobile étant configuré pour réaliser un support uniforme de communication mobile et de communication fixe ; et
la construction (9020) du système de réseau côté support, dans lequel le système de réseau côté porteur comprend le réseau métropolitain IP à support fixe-mobile et l'appareil du plan utilisateur du réseau central de communication mobile, et l'appareil du plan utilisateur du réseau central de communication mobile est en connexion de communication avec le réseau métropolitain IP à support fixe-mobile ;
dans lequel le système de réseau côté support comprend en outre : un appareil de plan d'utilisateur de réseau central de communication fixe intégré à la couche d'agrégation du réseau métropolitain IP à support fixe-mobile, l'appareil de plan d'utilisateur de réseau central de communication mobile étant connecté à l'appareil de plan d'utilisateur de réseau central de communication fixe ;
dans lequel un réseau de distribution de contenu, CDN, rattaché à une couche d'agrégation d'un réseau de communication fixe est déployé au niveau de l'appareil du plan utilisateur du réseau central de communication fixe ; et
**caractérisé par le fait que** le système de réseau côté support comprend en outre : un premier réseau de secours, dans lequel le premier réseau de secours et un réseau de communication du plan utilisateur sont configurés pour fonctionner dans un mode de secours actif, et le réseau de communication du plan utilisateur comprend au moins l'un de l'appareil de plan d'utilisateur du réseau central de communication mobile ou de l'appareil du plan d'utilisateur du réseau central de communication fixe.

13. Méthode de déploiement d'un système de coexistence et de convergence fixe-mobile, comprenant :
l'intégration (10010) d'un appareil de plan utilisateur de réseau central de communication mobile et d'un appareil de plan utilisateur de réseau central de communication fixe dans une couche d'agrégation d'un réseau métropolitain IP à support fixe-mobile, dans lequel le réseau métropolitain IP à support fixe-mobile est configuré pour réaliser un support uniforme de communication mobile et de communication fixe ; et
la construction (10020) du système de coexistence et de convergence fixe-mobile, dans lequel le système de coexistence et de convergence fixe-mobile comprend un système de réseau côté support, un système de réseau côté accès, un appareil de passerelle multiservice, MSG, et un appareil de plan de contrôle de réseau central de communication mobile situé du côté d'un réseau central ; le système de réseau côté support comprend le réseau métropolitain IP à support fixe-mobile et l'appareil de plan d'utilisateur du réseau central de communication mobile, et l'appareil de plan d'utilisateur du réseau central de communication mobile est en connexion de communication avec le réseau métropolitain IP à support fixe-mobile ; le MSG comprend l'appareil de plan d'utilisateur du réseau central de communication fixe et un appareil de plan de contrôle du réseau central de communication fixe situé du côté du réseau central, et l'appareil de plan d'utilisateur du réseau central de communication mobile est connecté à l'appareil de plan d'utilisateur du réseau central de communication fixe ;
dans lequel un réseau de distribution de contenu, CDN, intégré à une couche d'agrégation d'un réseau de communication fixe est déployé au niveau de l'appareil du plan utilisateur du réseau central de communication fixe ; et
**caractérisé par le fait que** le système comprend en outre : un premier réseau de secours, dans lequel le premier réseau de secours et un réseau de communication du plan utilisateur sont configurés pour fonctionner en mode de secours actif, et le réseau de communication du plan d'utilisateur comprend au moins l'un de l'appareil de plan utilisateur du réseau central de communication mobile ou de l'appareil de plan utilisateur du réseau central de communication fixe.
